# EUROPÄISCHE PATENTSCHRIFT

(11) **EP 3 605 821 B1**
(45) Veröffentlichungstag und Bekanntmachung des Hinweises auf die Patenterteilung: **18.05.2022**
(21) Anmeldenummer: 19178714.2
(22) Anmeldetag: 06.06.2019
(51) Int. Cl.: H02M 5/293, H02M 5/297

(54) **SELBSTGEFÜHRTER DIREKTUMRICHTER UND ANSTEUERVERFAHREN FÜR SELBSTGEFÜHRTEN DIREKTUMRICHTER**
SELF-CONTROLLED DIRECT CONVERTER AND CONTROL METHOD FOR SELF-CONTROLLED DIRECT CONVERTER
ONDULEUR DIRECT AUTOGUIDÉ ET PROCÉDÉ DE COMMANDE POUR L'ONDULEUR DIRECT AUTOGUIDÉ

(30) Priorität: 02.08.2018 DE 102018006120
(43) Veröffentlichungstag der Anmeldung: 05.02.2020
(73) Patentinhaber: MBDA Deutschland GmbH, 86529 Schrobenhausen (DE)
(72) Erfinder: Klaffert, Thomas, 85356 Freising (DE); Petzoldt, Jürgen, 98693 Ilmenau (DE); Rädel, Uwe, 98693 Ilmenau (DE)
(74) Vertreter: Isarpatent

(56) Entgegenhaltungen:
- US-A- 5 892 677
- CHANG J ET AL: "HIGH-FREQUENCY AC-AC CONVERTER USING 3-IN-1 IBPMS AND ADAPTIVE COMMUTATION", 30TH ANNUAL IEEE POWER ELECTRONICS SPECIALISTS CONFERENCE. PESC 99. RECORD. CHARLESTON; [ANNUAL POWER ELECTRONICS SPECIALISTS CONFERENCE], NEW YORK, NY : IEEE, US, 1. Januar 1999 (1999-01-01), Seiten 351-357, XP000924755, DOI: 10.1109/PESC.1999.789027 ISBN: 978-0-7803-5422-7

## Beschreibung

### TECHNISCHES GEBIET DER ERFINDUNG

Die Erfindung betrifft selbstgeführte Direktumrichter, auch Matrixumrichter genannt. Die Erfindung beschäftigt sich insbesondere mit Ansteuerverfahren zur Ansteuerung selbstgeführter Direktumrichter, beispielsweise bei der Implementierung einer strombasierten 4-Stufen-Kommutierung.

### TECHNISCHER HINTERGRUND

Einrichtungen zum Umformen oder Steuern elektrischer Energie werden Stromrichter genannt. Dazu werden Stromrichterventile eingesetzt, die Strom, Spannung, Frequenz und/oder Phasenanzahl von Netz- zu Lastseite steuerbar verändern. Eine besondere Klasse von Stromrichtern sind Umrichter, die Gleichstrom in Gleichstrom oder Wechselstrom in Wechselstrom richten.

Zur Erzeugung einer mehrphasigen ausgangsseitigen bzw. lastseitigen Wechselspannung, die sich in Frequenz und Spannungswert von der eingangsseitigen bzw. netzseitigen Wechselspannung unterscheidet, können Direktumrichter eingesetzt werden, d.h. Umrichter, die im Gegensatz zu Zwischenkreisumrichtern Wechselspannung bzw. Wechselstrom direkt und unmittelbar ineinander umwandeln, ohne dass beim Umrichtvorgang Energie in einem Gleichspannungszwischenkreis gespeichert bzw. gepuffert werden muss. Anders als bei im industriellen Anwendungsbereich schon länger etablierten Zwischenkreisumrichtern oder Pulswechselrichtern kann bei einem Direktumrichter auf einen Energie speichernden Zwischenkreis mit entsprechend komplexen und teuren Zwischenkreiselementen verzichtet werden. Der Stromfluss bei Direktumrichter kann prinzipbedingt bidirektional erfolgen, so dass Direktumrichter rückspeisefähig sind und sich eine Unterteilung in "Netzseite" und "Lastseite" hauptsächlich aus der Anwendung heraus ergibt.

Direktumrichter wiederum lassen sich in fremdgeführte und selbstgeführte Direktumrichter unterteilen. Fremdgeführte Direktumrichter weisen grundsätzlich für jedes Eingangs- und Ausgangsphasenpaar einen netzgeführten Umkehrstromrichter auf, die je nach gewähltem Fremdsteuerverfahren gemeinsam als Trapezumrichter oder als Steuerumrichter betrieben werden können.

Im Gegensatz dazu weisen selbstgeführte Direktumrichter oder auch "Matrixumrichter" (englisch "matrix Converter") als essentielles Element eine Schaltmatrix aus bidirektionalen Schaltelementen, meist Halbleiterschaltelementen auf, welche jeweils im eingeschalteten Zustand einen Stromfluss in beide Richtungen gewährleisten können, aber im ausgeschalteten Zustand Strom in beide Richtungen sperren. Dadurch wird ein selbstgeführter Direktumrichter in die Lage versetzt, eine Zwangskommutierung des Stromes von einem Zweig auf einen anderen vorzunehmen. Jedes der bidirektionalen Schaltelemente verbindet dabei eine der Eingangsphasen mit einer der Ausgangsphasen, so dass beispielsweise bei einem selbstgeführten Dreiphasendirektumrichter 3 x 3 = 9 bidirektionale Schaltelemente in einer Schaltmatrix benötigt werden.

Eine der Herausforderungen beim Betrieb von selbstgeführten Direktumrichtern besteht in der geeigneten Ansteuerung der bidirektionalen Schaltelemente bei der Kommutierung, d.h. bei einem Übergang von Strom und Spannung von einem der laststromführenden Schaltzweige auf einen anderen. Dies liegt daran, dass bei selbstgeführten Direktumrichtern in besonderer Weise darauf geachtet werden muss, Zweigkurzschlüsse auf der spannungseinprägenden Seite ("Netzseite") und Stromunterbrechungen auf der stromeinprägenden Seite ("Lastseite") zu vermeiden.

Die Druckschrift Lee, K.-B.; Blaabjerg, F.: "A modified DTC-SVM for sensorless matrix converter drives using a simple deadbeat scheme", HAIT Journal of Science and Engineering B, Vol. 2 (5-6), Seiten 715 bis 735 beispielsweise offenbart ein 4-Stufen-Kommutierungsschema mit einer vordefinierten Kommutierungsverzögerung. Die Druckschriften US 2005/0281066 A1 und US 2015/0085552 A1 offenbaren jeweils 4-Stufen-Kommutierungsschemata für Matrixkonverter, bei denen die Kommutierungsverzögerung festgelegt ist. Die Druckschrift DE 100 57 785 A1 offenbart ein pulsweitenmoduliertes Ansteuerverfahren für Matrixumrichter, bei dem die Kommutierungssequenzen in Abhängigkeit der ermittelten Eingangsspannung gezielt vertauscht werden.

Die Druckschriften US 5,892 677 A und Chang, J. et al.: "High-Frequency AC-AC Converter Using 3-in-1 IBPMS and Adaptive Commutation", 30th Annual IEEE Power Electronics Specialists Conf., New York 1999, Seiten 351 bis 357 offenbaren integrierte bidirektionale Leistungsmodule für den Einsatz in Umrichtern mit adaptiver Sequenzkommutierung.

Es besteht ein Bedarf an Verbesserungen bei der Ansteuerung von selbstgeführten Umrichtern, die es ermöglichen, eine kontinuierliche Ansteuerung bei gleichzeitiger Minimierung der Auswirkung von Spannungsspitzen und Laststromunterbrechungen zu implementieren.

### ZUSAMMENFASSUNG DER ERFINDUNG

Eine der Aufgaben der Erfindung besteht darin, Lösungen für die Ansteuerung selbstgeführter Direktumrichter zu finden, die eine dynamische Anpassung kontinuierlicher idealer Ansteuersignale für die Kommutierung bidirektionaler Schaltelemente eines selbstgeführten Direktumrichters erlauben.

Diese und andere Aufgaben werden durch einen selbstgeführten Direktumrichter mit den Merkmalen des Anspruchs 1, durch ein Ansteuerverfahren für einen selbstgeführten Direktumrichter mit den Merkmalen des Anspruchs 8, und ein elektrisches Antriebssystem mit den Merkmalen des Anspruchs 9 gelöst.

Gemäß einem ersten Aspekt der Erfindung umfasst ein selbstgeführter Direktumrichter, auch Matrixumrichter genannt, eine Schaltmatrix aus mehreren Stromrichterventilen. Jedes der Stromrichterventile weist ein zwei Schalter aufweisendes bidirektionales Schaltelement und eine Ventilsteuereinrichtung auf. Die Ventilsteuereinrichtungen weisen jeweils eine Kommutierungssteuervorrichtung und zwei mit der Kommutierungssteuervorrichtung gekoppelte Gatetreiber auf. Die Kommutierungssteuervorrichtung ist dazu ausgelegt, pulsweitenmodulierte Steuersignale zu empfangen und auf deren Basis idealisierte Gatesignale zu erzeugen. Die Gatetreiber sind dazu ausgelegt, in Abhängigkeit von laststromabhängigen (negativen oder positiven) Verzögerungssollwerten die von der Kommutierungssteuervorrichtung empfangenen idealisierten Gatesignale zeitlich zu verzögern und als verzögerungsangepasste Gatesignale an Gateanschlüsse der Schalter des bidirektionalen Schaltelements auszugeben.

Gemäß einem zweiten Aspekt der Erfindung umfasst ein Ansteuerverfahren für einen selbstgeführten Direktumrichter, welcher einer Schaltmatrix aus mehreren Stromrichterventilen mit jeweils einem zwei Schalter aufweisenden bidirektionalen Schaltelement und einer Ventilsteuereinrichtung aufweist, die Schritte des Erzeugens pulsweitenmodulierter Steuersignale für jedes der Stromrichterventilen, des Erzeugens, durch die Ventilsteuereinrichtung jedes der Stromrichterventile, von idealisierten Gatesignale auf der Basis des pulsweitenmodulierten Steuersignal für das jeweilige Stromrichterventil, des Bestimmens von laststromabhängigen (negativen oder positiven) Verzögerungssollwerten auf der Basis des momentanen Laststroms durch die Umrichterzweige des Direktumrichters, und des zeitlichen Verzögerns der idealisierten Gatesignale in Abhängigkeit von den laststromabhängigen Verzögerungssollwerten zur Bildung verzögerungsangepasste Gatesignale für Gateanschlüsse der Schalter des bidirektionalen Schaltelements.

Ein weiteres beispielhaftes Ansteuerverfahren für einen selbstgeführten Direktumrichter, welcher einer Schaltmatrix aus mehreren Stromrichterventilen mit jeweils einem zwei Schalter aufweisenden bidirektionalen Schaltelement und einer Ventilsteuereinrichtung aufweist, umfasst die Schritte des Bestimmens laststromabhängiger (negativer oder positiver) Verzögerungssollwerte auf der Basis des momentanen Laststroms durch die Umrichterzweige des Direktumrichters, des Erzeugens pulsweitenmodulierter Steuersignale für jedes der Stromrichterventile, des zeitlichen Verzögerns der pulsweitenmodulierten Steuersignale in Abhängigkeit von den laststromabhängigen Verzögerungssollwerten zur Bildung verzögerungsangepasster Steuersignale, und des Erzeugens, durch die Ventilsteuereinrichtung jedes der Stromrichterventile, von Gatesignalen für Gateanschlüsse der Schalter des bidirektionalen Schaltelements auf der Basis des verzögerungsangepassten Steuersignals für das jeweilige Stromrichterventil.

Gemäß einem dritten Aspekt der Erfindung umfasst ein elektrisches Antriebssystem einen selbstgeführten Direktumrichter gemäß dem ersten Aspekt der Erfindung, eine mit den Ausgangsphasen des selbstgeführten Direktumrichters gekoppelte elektrische Maschine, insbesondere ein dreiphasiger Drehstrommotor oder eine einphasige Wechselstrom- oder Gleichstrommaschine, und ein mit den Eingangsphasen des selbstgeführten Direktumrichters gekoppelten Netzspannungsfilter.

Eine wesentliche Idee der Erfindung besteht darin, pulsweitenmodulierte Gatesignale für die Ansteuerung der Schalter der bidirektionalen Schaltelemente eines Matrixumrichters dynamisch adaptiv zu verschieben, so dass Ein- und Ausschaltflanken der Schalter je nach Betrag des kommandierten Laststroms um eine variable Zeitspanne zueinander versetzt werden.

Ein besonderer Vorteil der erfindungsgemäßen Lösungen besteht darin, dass eine derartige Kommutierungsstrategie es erlaubt, Kurzschlüsse auf der Netzseite und Überspannungen auf der Lastseite effektiv zu vermeiden. Weiterhin können mit dynamisch adaptiven Gatesignalverschiebungen kontinuierliche Pulsweitenmodulationsverfahren eingesetzt werden, die es erlauben, auf besonders ausgelegte Filterelemente auch für höhere Leistungsbereiche zu verzichten.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des erfindungsgemäßen selbstgeführten Direktumrichters können die pulsweitenmodulierte Steuersignale auf der Basis eines kontinuierlichen Pulsweitenmodulationsverfahrens, insbesondere eines Raumzeigermodulationsverfahrens oder eines kontinuierlichen Unterschwingungsverfahrens, erzeugt werden.

Gemäß einigen weiteren Ausführungsformen des erfindungsgemäßen selbstgeführten Direktumrichters kann der Direktumrichter weiterhin eine mit den Gatetreibern gekoppelte Verzögerungssteuereinrichtung aufweisen. Diese kann momentane Messwerte für elektrische Betriebsparameter des Direktumrichters erhalten und in Abhängigkeit von den momentanen Messwerten für die elektrischen Betriebsparameter die laststromabhängigen Verzögerungssollwerte berechnen. In manchen Ausführungsformen können die momentanen Messwerte für elektrische Betriebsparameter die Richtung des Laststromflusses und den Betrag des momentanen Laststroms in den einzelnen Umrichterzweigen des Direktumrichters umfassen.

Gemäß einigen weiteren Ausführungsformen des erfindungsgemäßen selbstgeführten Direktumrichters und der Ansteuerverfahren können die Schalter des bidirektionalen Schaltelements antiseriell geschaltete Halbleiterschalter mit jeweils antiparallel geschalteter Freilaufdiode umfassen, insbesondere IGBT-Schalter oder MOSFET-Schalter und dabei speziell SiC-MOSFET-Schalter.

Gemäß einigen Ausführungsformen der erfindungsgemäßen Ansteuerverfahren kann das Erzeugen pulsweitenmodulierter Steuersignale auf der Basis eines kontinuierlichen Pulsweitenmodulationsverfahren, insbesondere eines Raumzeigermodulationsverfahrens oder eines kontinuierlichen Unterschwingungsverfahrens, erfolgen.

Gemäß einigen weiteren Ausführungsformen der erfindungsgemäßen Ansteuerverfahren kann das Bestimmen der laststromabhängigen Verzögerungssollwerten auf der Basis momentaner Messwerte für die Richtung des Laststromflusses und den Betrag des momentanen Laststroms in den einzelnen Umrichterzweigen des Direktumrichters erfolgen.

Die obigen Ausgestaltungen und Weiterbildungen lassen sich, sofern sinnvoll, beliebig miteinander kombinieren.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines selbstgeführten Direktumrichters gemäß einer Ausführungsform der Erfindung;
Fig. 2 ein schematisches Blockschaltbild eines beispielhaften Stromrichterventils des selbstgeführten Direktumrichters der Fig. 1 gemäß einer weiteren Ausführungsform der Erfindung;
Fig. 3 zwei Flussdiagramme von verschiedenen Ansteuerverfahren für einen selbstgeführten Direktumrichter gemäß einer weiteren Ausführungsform der Erfindung;
Fig. 4 ein Zeitablaufdiagramm für Ansteuersignale bidirektionaler Schaltelemente zur Visualisierung der Funktionsweise des Ansteuerverfahrens der Fig. 3(A) gemäß einer weiteren Ausführungsform der Erfindung; und
Fig. 5 eine allgemeine Funktionsblockstruktur der Ansteuerung eines selbstgeführten Direktumrichters mit integrierten Ventilsteuereinrichtungen gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

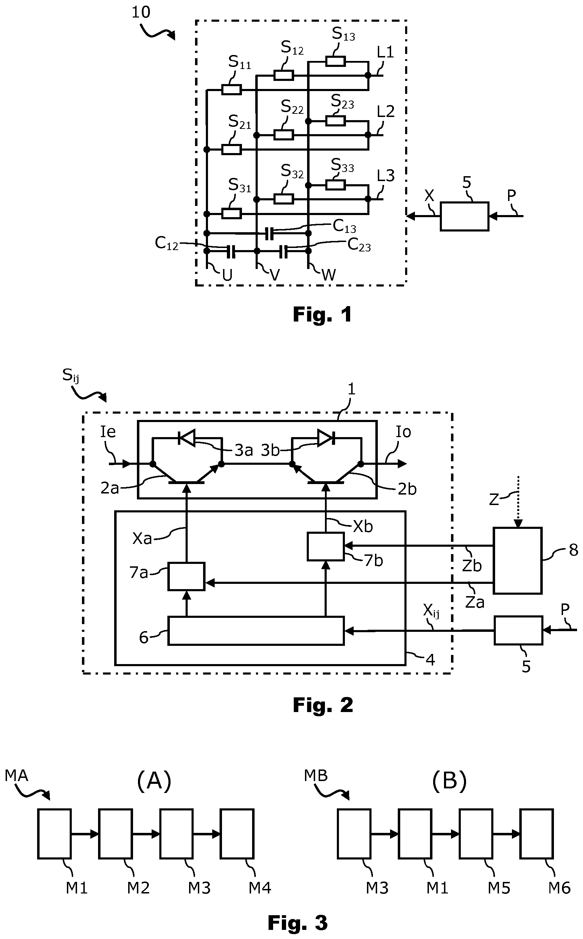

Fig. 1 zeigt ein schematisches Blockschaubild eines selbstgeführten Direktumrichters 10. Der selbstgeführte Direktumrichter 10 oder auch "Matrixumrichter" (englisch "matrix converter") weist eine Schaltmatrix aus Stromrichterventilen S₁₁ bis S₃₃ auf. Im Beispiel der Fig. 1 ist der selbstgeführte Direktumrichter 10 ein dreiphasiger Direktumrichter, welcher drei Eingangsphasen U, V und W in drei Ausgangsphasen L1, L2 und L3 umrichtet. Zwischen den jeweiligen Eingangsphasen U, V und W können dabei Filterelemente zur Schwingungsdämpfung und Pufferung eingesetzt werden, beispielsweise Zwischenkreiskondensatoren C₁₂, C₁₃ und C₂₃. Weiterhin können vor den drei Eingangsphasen U, V und W konventionelle Filterelemente zur Netzspannungsfilterung (z.B. LC-Filter) angeordnet werden.

Auf der Lastseite des Direktumrichters 10 kann beispielsweise ein Drehstrommotor an die drei Ausgangsphasen L1, L2 und L3 angeschlossen werden, so dass der selbstgeführte Direktumrichter 10 zusammen mit dem Drehstrommotor in einem elektrischen Antriebssystem eingesetzt werden kann. Auf der stromeingeprägten Seite kann auch eine einphasige Zweileiteranwendung zum Einsatz kommen, beispielsweise mit einer einphasigen Wechselstrom- oder Gleichstrommaschine als Last oder mit einem über einen LC-Filter angeschlossenen einphasigen Netz (z.B. als Inselnetz oder im Netzparallelbetrieb). In letzterem Fall kann dazu eine der stromeingeprägten Phasen freibleiben, d.h. nicht an die Zweileiteranwendung angeschlosen werden.

Fig. 2 zeigt eine beispielhafte Ausgestaltung eines der Stromrichterventile S₁₁ bis S₃₃ (in Fig. 2 allgemein als Stromrichterventil Sᵢⱼ bezeichnet). Die Stromrichterventile Sᵢⱼ können dabei bidirektionale Schaltelemente 1 aufweisen, die jeweils im eingeschalteten Zustand einen Stromfluss in beide Richtungen gewährleisten können, aber im ausgeschalteten Zustand Strom in beide Richtungen sperren.

Für die Implementierung eines bidirektionalen Schaltelementes 1 bestehen grundsätzlich verschiedene Möglichkeiten, die im eingeschalteten Zustand einen bidirektionalen Stromfluss (Eingangsstrom Ie und Ausgangsstrom Io bzw. umgekehrt) und im ausgeschalteten Zustand eine bidirektionale Rücksperrfähigkeit aufweisen. Beispielsweise kann - wie in Fig. 2 beispielhaft dargestellt - eine antiserielle Schaltung zweier Bipolartransistorschalter mit isolierter Gate-Elektrode (IGBT-Schalter) 2a und 2b mit gemeinsamem Emitteranschluss implementiert werden. Über die jeweiligen IGBT-Schalter 2a bzw. 2b hinweg können jeweils antiparallele Dioden 3a bzw. 3b geschaltet werden, die entweder als separate Bauelemente implementiert werden können oder in den jeweiligen der Schalter 2a bzw. 2b integriert sein können. Selbstverständlich kann es auch möglich sein, für die Schalter 2a und 2b jeweils Metall-Oxid-Halbleiter-Feldeffekttransistorschalter ("MOSFETs") einzusetzen, die in Common-Source-Schaltung angeordnet werden. Es ist weiterhin auch möglich, die IGBT-Schalter 2a bzw. 2b mit gemeinsamem Kollektoranschluss zu implementieren bzw. die MOSFET-Schalter in Common-Drain-Schaltung anzuordnen. Die MOSFETs können dabei beispielsweise auf Siliziumcarbidbasis implementiert werden (SiC-MOSFETs).

Es kann dabei möglich sein, nur einen einzelnen Gateanschluss für beide Schalter 2a und 2b vorzusehen, ebenso wie es auch möglich ist, nur eine einzelne Isolationsschaltung für beide Schalter 2a und 2b vorzusehen. Weiterhin kann ein bidirektionales Schaltelement auch als zwei antiparallel geschaltete Thyristoren, antiparallel geschaltete rücksperrfähige und rückwärts schaltbare IGBTs oder rücksperrfähige und rückwärts schaltbare MOSFETs implementiert werden, jeweils mit gemeinsamem Gate-Anschluss bzw. Steueranschluss. In diesen Fällen kann es nötig sein, für jeden der einzelnen Schalter 2a bzw. 2b eine separate Isolationsschaltung vorzusehen.

Für die Ansteuerung der Schalter 2a, 2b jedes der Stromrichterventile Sᵢⱼ des selbstgeführten Direktumrichter 10 ist ein Umrichtersteuergerät 5 vorgesehen, welches pulsweitenmodulierte Steuersignale X aus analogen Sollwertsignalen P für den Betrieb des Direktumrichters 10 erzeugt. Dabei wird für jedes der Stromrichterventile Sᵢⱼ des Direktumrichters 10 ein separates amplituden- und phasenangepasstes Steuersignal Xᵢⱼ erzeugt.

Das schematische Blockschaltbild eines beispielhaften Stromrichterventils Sᵢⱼ des selbstgeführten Direktumrichters 10 der Fig. 2 zeigt weiterhin eine Ventilsteuereinrichtung 4, welche dem jeweiligen bidirektionalen Schaltelement 1 zugeordnet ist. Die Ventilsteuereinrichtung 4 umfasst zum einen eine Kommutierungssteuervorrichtung 6 und zum anderen zwei Gatetreiber 7a und 7b, jeweils ein Gatetreiber pro Schalter 2a und 2b.

Bei der Kommutierung, d.h. dem Übergang von Strom und Spannung zwischen Schaltern unterschiedlicher Umrichterzweige, ist bei selbstgeführten Direktumrichtern 10 in besonderem Maße auf die Vermeidung von Zweigkurzschlüssen auf der spannungseingeprägten Seite ("Netzseite") und Stromunterbrechungen auf der stromeinprägenden Seite ("Lastseite") zu achten. Durch das reale Schaltverhalten der Schalter 2a und 2b der bidirektionalen Schaltelemente 1 können Kommutierungsvorgänge in der Praxis weder zum theoretisch idealen Zeitpunkt noch in unendlich kurzer Zeit stattfinden. Bisherige Ansätze zur Kommutierung in selbstgeführten Direktumrichtern wie etwa die strombasierte Kommutierung ("current-based commutation", CBC), die spannungsbasierte Kommutierung ("voltage-based commutation", VBC) oder Hybridkommutierungsverfahren basieren auf der Wahl der Kommutierungsstrategie und der Kommutierungssequenzen in Abhängigkeit von Stromrichtung und -amplitude auf der Lastseite bzw. Spannungswerten auf der Netzseite des Direktumrichters. Schwierigkeiten bei der präzisen und rechtzeitigen Messung der jeweiligen Betriebsparameter können jedoch zu Unregelmäßigkeiten in der Wahl der Kommutierungsstrategie und daraus resultierenden Überspannungen oder Kurzschlüssen führen.

Basierend auf der strombasierten Kommutierung existieren Verfahren wie die 4-Stufen-Kommutierung ("four step commutation"), die feste Verzögerungszeiten bzw. Totzeiten zwischen den einzelnen Einschalt- und Ausschaltvorgängen der Schalter der bidirektionalen Schaltelemente eines selbstgeführten Direktumrichters einfügt, um Laststromunterbrechungen und Spannungsspitzen zu vermeiden.

Die Ventilsteuereinrichtung 4 jedoch nutzt eine zustandsabhängige Einschalt- und Ausschaltverzögerung, welche basierend auf einem aktuellen Betrag des Laststroms dynamisch angepasst werden kann. Zu diesem Zweck ist die Kommutierungssteuervorrichtung 6 dazu ausgelegt, das Steuersignal Xᵢⱼ als Eingangssignal von dem Umrichtersteuergerät 5 entgegenzunehmen und daraus idealisierte Gatesignale für Gatetreiber 7a und 7b der beiden Schalter 2a bzw. 2b zu erzeugen. Die Gatetreiber 7a und 7b wiederum sind mit einer Verzögerungssteuereinrichtung 8 des selbstgeführten Direktumrichters 10 gekoppelt, welche momentane Messwerte für elektrische Betriebsparameter Z des Direktumrichters erhält und in Abhängigkeit von den erhaltenen Messwerten für die elektrischen Betriebsparameter Z an die Schalter 2a bzw. 2b angepasste Verzögerungssollwerte Za bzw. Zb berechnet.

Die Messwerte für elektrische Betriebsparameter Z umfassen insbesondere die Richtung des Laststromflusses und den Betrag des momentanen Laststroms. Dabei können die Lastströme in den jeweiligen Umrichterzweigen gemessen werden und die Verzögerungssollwerte Za bzw. Zb einerseits in Abhängigkeit von der Charakteristik der verwendeten Technologie der Schalter 2a bzw. 2b und andererseits proportional zum momentanen Betrag des Laststroms in dem jeweiligen Umrichterzweig gebildet werden.

Die Verzögerungssollwerte Za und Zb werden in die Gatetreiber 7a bzw. 7b eingespeist, die in Abhängigkeit von den Verzögerungssollwerten Za und Zb und den von der Kommutierungssteuervorrichtung 6 empfangenen idealisierten Gatesignalen verzögerungsangepasste Gatesignale Xa und Xb erzeugt. Die verzögerungsangepassten Gatesignale Xa und Xb werden zur Ansteuerung der Schalter 2a bzw. 2b an die jeweiligen Gateanschlüsse der Schalter 2a und 2b angelegt.

Durch die Verwendung verzögerungsangepasster Gatesignale Xa und Xb von den Gatetreibern 7a und 7b, die dynamisch adaptive Verzögerungssollwerte Za und Zb in die Einschalt- und Ausschaltverzögerung der Schalter 2a bzw. 2b miteinbeziehen, können die idealisierten Gatesignale derart zeitlich verzögert werden, dass es auf der stromeinprägenden Seite zu keinen Laststromunterbrechungen kommen kann. Gleichzeitig werden Zweigkurzschlüsse auf der spannungseingeprägten Seite vermieden.

Wenn nun gleichzeitig mit der dynamisch adaptiven Einschalt- und Ausschaltverzögerung ein kontinuierliches Pulsweitenmodulationsverfahren zur Erzeugung der Steuersignale Xᵢⱼ für den selbstgeführten Direktumrichter genutzt wird, können wesentliche Teile des Filterkreises zur Pufferung von Spannungs- und Stromspitzen entfallen. Dadurch können die bislang nur theoretisch erzielbaren Vorteile eines Direktumrichters - kompakter Aufbau, geringe Zusatzkosten für Filterelemente, geringe Masse durch wenige passive Bauelemente - auch praktisch zum Tragen kommen.

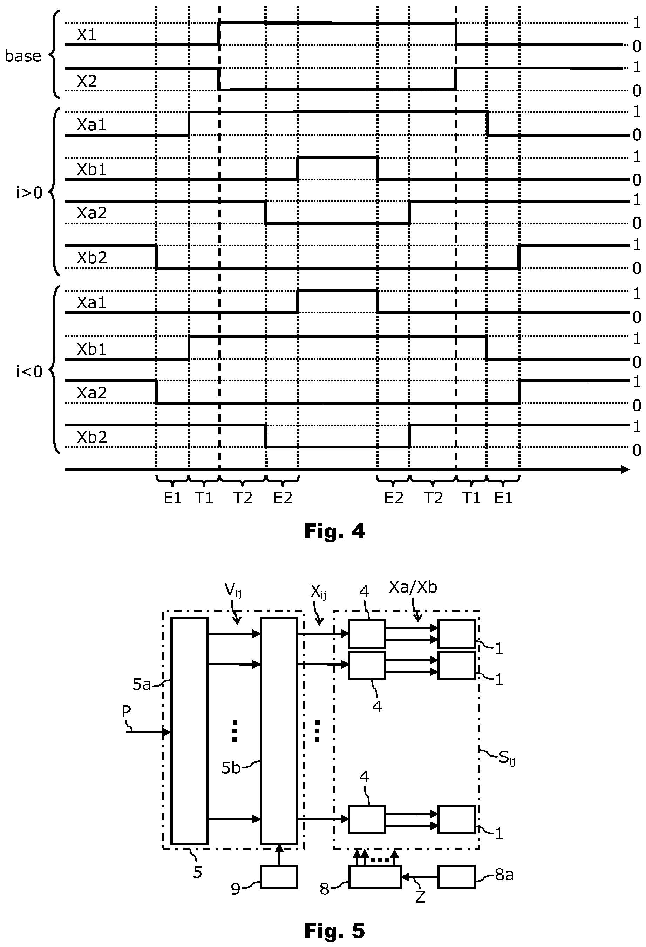

Fig. 3(A) und (B) zeigen in schematischer Form Flussdiagramme von Ansteuerverfahren MA und MB für einen selbstgeführten Direktumrichter. Die Ansteuerverfahren MA und MB können beispielsweise für die Ansteuerung des selbstgeführten Direktumrichters 10 der Fig. 1 eingesetzt werden. Das Ansteuerverfahren MA der Fig. 3(A) wird im Zusammenhang mit Fig. 4 näher erläutert. Fig. 4 illustriert ein Zeitablaufdiagramm für Ansteuersignale bidirektionaler Schaltelemente, beispielsweise der bidirektionalen Schaltelemente 1 der Fig. 2, zur Visualisierung der Funktionsweise des Ansteuerverfahrens MA der Fig. 3(A).

Das Ansteuerverfahren MA umfasst in Schritt M1 zunächst ein Erzeugen pulsweitenmodulierter Steuersignale Xᵢⱼ für jedes der Stromrichterventile Sᵢⱼ. Die Ventilsteuereinrichtung 4 jedes der Stromrichterventile Sᵢⱼ erzeugt in Schritt M2 dann idealisierte Gatesignale auf der Basis des pulsweitenmodulierten Steuersignals Xᵢⱼ für das jeweilige Stromrichterventil Sᵢⱼ. Im Wesentlichen zeitgleich zur Erzeugung der idealisierten Gatesignale werden in Schritt M3 laststromabhängige Verzögerungssollwerten Za und Zb bestimmt, beispielsweise durch eine Verzögerungssteuereinrichtung 8. Diese Verzögerungssollwerte basieren auf dem gemessenen momentanen Laststrom durch die Umrichterzweige des Direktumrichters 10.

Schließlich werden in Schritt M4 die idealisierten Gatesignale in Abhängigkeit von den laststromabhängigen Verzögerungssollwerten Za, Zb zeitlich verzögert, um so verzögerungsangepasste Gatesignale Xa, Xb zu bilden, die an die Gateanschlüsse der Schalter 2a bzw. 2b des bidirektionalen Schaltelements 1 angelegt werden können. Wie die verzögerungsangepassten Gatesignale Xa, Xb im Detail gebildet werden können wird im Zusammenhang mit Fig. 4 im Folgenden beispielhaft erklärt.

Alle in Fig. 4 dargestellten Signale sind zeitliche 2-Bit-Signalverläufe für die Ansteuerung von Schaltern, bei denen ein Schalter entweder eingeschaltet (Signalwert "1") oder ausgeschaltet (Signalwert "0") ist. Dabei stellen die Signalverläufe jeweils digitale Steuersignale für die Gates von Schaltern bidirektionaler Schaltelemente dar.

In den oberen beiden als "base" gekennzeichneten Signalverläufen sind die idealisierten Steuersignale X1 und X2 für die theoretische ideale Kommutierung zweier antiseriell geschalteter bidirektionaler Schaltelemente 1 unterschiedlicher Umrichterzweige dargestellt. Bis zu einem ersten durch die linke gestrichelte vertikale Linie gekennzeichneten Zeitpunkt ist das durch das Steuersignal X2 angesteuerte bidirektionale Schaltelement eingeschaltet, während das durch das Steuersignal X1 angesteuerte bidirektionale Schaltelement ausgeschaltet ist. Bei einer theoretisch idealen Kommutierung würde das eingeschaltete bidirektionale Schaltelement exakt zum selben Zeitpunkt ausgeschaltet, zu dem das ausgeschaltete bidirektionale Schaltelement eingeschaltet wird. Bei einer weiteren Kommutierung zu einem zweiten durch die rechte gestrichelte vertikale Linie gekennzeichneten Zeitpunkt würde dann der Vorgang umgekehrt ablaufen. Die Steuersignale X1 und X2 stellen dabei beispielsweise Signalvorgaben gemäß eines kontinuierlichen Pulsweitenmodulationsverfahrens dar.

Da es aber aufgrund der realen Schaltbedingungen der bidirektionalen Schaltelement zu ansteigenden und abfallenden Flanken des Laststromes und der an den Schaltern anliegenden Spannungen kommt, würde eine derartige theoretisch ideale Kommutierung zu Überspannungen und Laststromunterbrechungen führen, die die Schaltelemente und andere Komponenten des Direktumrichters oder der angeschlossenen Lasten schädigen können. Daher wird der Kommutierungsvorgang auf vier Stufen aufgeteilt, zwischen denen jeweils Verriegelungszeitspannen vorgesehen sind. Die Verriegelungszeitspannen können dabei je nach Bedarf dynamisch adaptiv oder vorab festgelegt sein.

Die beiden folgenden Signalverlaufsgruppen aus den Signalverläufen Xa1, Xb1, Xa2 und Xb2 beziehen sich jeweils auf Fälle unterschiedlicher Laststromrichtungen in den Umrichterzweigen - bei der mittleren Signalverlaufsgruppe ist der Laststrom positiv (i>0), bei der unteren Signalverlaufsgruppe ist der Laststrom negativ (i<0). Dabei ist jedoch zu beachten, dass die Eigenschaften "positiv" oder "negativ" lediglich relativ zueinander zu betrachten sind und in den folgenden Erläuterungen nur zur sprachlich einfacheren Abgrenzung der beiden Fallgruppen gebraucht werden.

Im Falle positiver Laststromrichtung erfolgt der Stromübergang vom stromführenden Umrichterzweig "2", d.h. von der Freilaufdiode 3b des Schalters 2b, auf den Umrichterzweig "1", d.h. auf den Schalter 2a. Hierzu wird in einer ersten Stufe zunächst das Steuersignal Xb2 für den Schalter 2b des stromführenden Umrichterzweigs "2" auf 0 gesetzt. Danach wird eine erste Zweigverriegelungszeitspanne E1 abgewartet, bevor das Steuersignal Xa1 für den Schalter 2a des den Strom übernehmenden Umrichterzweigs "1" auf 1 gesetzt wird. Nachdem das Steuersignal Xa1 für den Schalter 2a des den Strom übernehmenden Umrichterzweigs "1" auf 1 gesetzt worden ist, wird eine zweite Zweigverriegelungszeitspanne abgewartet, die der Zeitspanne T1+T2 entspricht, bevor das Steuersignal Xa2 für den Schalter 2a des stromführenden Umrichterzweigs "2" auf 0 gesetzt wird. Eine dritte Zweigverriegelungszeitspanne E2 wird danach abgewartet, bevor das Steuersignal Xb1 für den Schalter 2a des den Strom übernehmenden Umrichterzweigs "1" auf 1 gesetzt wird.

Die zweite Zweigverriegelungszeitspanne zwischen den Einschaltflanken der beiden Schalter 2a und 2b des Umrichterzweigs "1" definiert somit diejenige Zeitspanne, binnen derer beim Übergang von einem stromführenden Umrichterzweig auf den nachfolgenden eine Mindestüberlappung der Zweigstromflüsse stattfinden kann, so dass während des Kommutierungsvorgangs auch bei realem Schalterverhalten und induktiver Kommutierung stets ein unterbrechungsfreier Laststrom fließen kann. Daher wird die zweite Zweigverriegelungszeitspanne in Abhängigkeit vom Laststrom in dem Umrichterzweig "2" eingestellt. Beispielsweise können die Zeitspannen T1 und T2 proportional zum Betrag des Laststromes dynamisch eingestellt werden.

Die Zeitspannen T1 und T2 werden dabei in den durch die Verzögerungssteuereinrichtung 8 generierten Verzögerungssollwerten Za und Zb abgebildet. Es sei darauf hingewiesen, dass der Begriff der "Verzögerung" nicht ausschließlich als durch positive Verzögerungssollwerte Za und Zb zu erreichen gemeint ist. Insbesondere kann es auch möglich sein, eine "Beschleunigung" oder "Vorverschiebung" in Form einer negativen Verzögerung zu erreichen, indem die Verzögerungssollwerte Za und Zb einen negativen Wert aufweisen. Mit anderen Worten soll das Konzept der Verzögerung sowohl eine negative als auch eine positive zeitliche Verschiebung von Signalflanken einschließen.

Es kann möglich sein, dass die Zeitspannen T1 und T2 gleich groß sind, insbesondere dann, wenn die beiden Schalter 2a und 2b des bidirektionalen Schaltelementes 1 im Wesentlichen die gleiche Bauweise und dabei eine ähnliche Charakteristik aufweisen. Es kann aber auch möglich sein, die Zeitspannen T1 und T2 unterschiedlich groß zu wählen.

In Analogie zu der auf der linken Seite der Fig. 4 dargestellten induktiven Kommutierung verhält es sich mit der kapazitiven Kommutierung aufgrund der zweiten Zweigverriegelungszeitspanne zwischen den jeweiligen Ausschaltflanken der rechten Seite der Fig. 4. Für den Fall der negativen Laststromrichtung (untere Signalverlaufsgruppe) erfolgt der Stromübergang entsprechend vom stromführenden Umrichterzweig "2", d.h. von der Freilaufdiode 3a des Schalters 2a, auf den Umrichterzweig "1", d.h. auf den Schalter 2b. Dementsprechend sind die Schaltflanken der Steuersignale innerhalb der denselben Umrichterzweigen zugehörigen bidirektionalen Schaltelementen bezüglich der einzelnen Schalter 2a und 2b vertauscht.

Die erste und dritte Zweigverriegelungszeitspanne E1 bzw. E2 können anhand von Charakteristiken der Schaltelemente als konstant festgelegt werden, damit unabhängig von der Stromrichtung (i>0 oder i<0) eine Zweigverriegelung sowohl bei kapazitiver Kommutierung als auch bei Kommutierung von einem Schalter des stromführenden Umrichterzweiges auf die Freilaufdiode des nachfolgenden Umrichterzweiges garantiert wird. Dadurch können Kurzschlüsse zwischen den Brücken auf der spannungseingeprägten Seite ("Netzseite") ausgeschlossen werden. Entsprechend der verwendeten Schaltelemente können die erste und dritte Zweigverriegelungszeitspanne E1 und E2 unterschiedlich groß gewählt werden, je nach Polarität der anliegenden Spannung und/oder Kommutierungsstufe.

Für den Fall geringen Laststroms (i≈0), d.h. im Stromrippelbereich, können alle nicht benötigten Schalter geschlossen bleiben. Die mit abnehmendem Laststrom relativ ansteigenden Amplituden des durch Umladen der Sperrschichtkapazitäten der nicht an der Kommutierung beteiligten Schalter bedingten Einschwingvorgangs zwischen der Kommutierungskapazität und der Kommutierungsinduktivität bleiben in derartigen Fällen unterhalb des doppelten Wertes der Schalterspannungen, so dass keine Überspannungsspitzen auftreten können.

Durch die sich bei einer Kommutierung des positiven Laststromes von einem Umrichterzweig auf den nachfolgenden ergebende Überlappung von T1+T2 der Einschaltzeiten der Schalter 2a der zwei Umrichterzweige "1" und "2" über den Versatz der Einschaltflanken der Steuersignale Xa1 und Xa2 (bzw. der Einschaltzeiten der Schalter 2b der zwei Umrichterzweige "1" und "2" über den Versatz der Einschaltflanken der Steuersignale Xb1 und Xb2 im Falle negativen Laststromes) ist während des Kommutierungsvorgangs ein lückenloser Laststromfluss gewährleistet. Entsprechend wird damit auch eine unterbrechungsfreie induktive Kommutierung möglich. Gleichzeitig stellen die Zweigverriegelungszeiten E1 und E2 sicher, dass unabhängig von der Laststromrichtung sowohl bei kapazitiver Kommutierung als auch bei Kommutierung von einem Schalter auf die jeweils zugeordnete antiparallele Freilaufdiode des nachfolgenden Umrichterzweiges Kurzschlüsse auf der spannungseingeprägten Seite des Direktumrichters ausgeschlossen werden können.

Wie sich aus den Erläuterungen im Bezug auf Fig. 4 ergibt, ist für die Ansteuerung des Direktumrichters die relative Zuordnung von Flanken zueinander essentiell. Daraus folgt, dass es alternativ auch möglich sein kann, die kontinuierlichen Modulationssignale vor der Ausgabe eines pulsweitenmodulierten Signals mit einem der zu verzögernden Zeit entsprechenden positiven oder negativen Verzögerungswert zu beaufschlagen. Beispielsweise kann bei einem aufsteigenden Sägezahnsignal in einem kontinuierlichen Unterschwingungsverfahren der kontinuierliche Vergleichs- oder Referenzschwellwert um einen der zu verzögernden Zeit entsprechenden Betrag verringert werden, so dass eine gegenüber der Flanke eines "idealisierten" Signals vorgezogene Flanke entsteht. In der Konsequenz lässt sich das gleiche Ergebnis dynamisch angepasster Zweigverriegelungszeitspannen für die Gatesignale der Schaltelemente des Direktumrichters durch eine adaptive Verzögerung der pulsweitenmodulierten Steuersignale erreichen.

Das Ansteuerverfahren MB der Fig. 3(B) umfasst in Schritt M3 daher zunächst ein Bestimmen laststromabhängiger Verzögerungssollwerte Za, Zb auf der Basis des momentanen Laststroms durch die Umrichterzweige des Direktumrichters 10. Wenn in Schritt M1 dann pulsweitenmodulierte Steuersignale Xᵢⱼ für jedes der Stromrichterventile Sᵢⱼ erzeugt worden sind, können diese Steuersignale Xᵢⱼ in Schritt M5 dann in Abhängigkeit von den laststromabhängigen Verzögerungssollwerten Za, Zb zur Bildung verzögerungsangepasster Steuersignale zeitlich verzögert werden.

Auf der Basis des verzögerungsangepassten Steuersignals Xᵢⱼ für das jeweilige Stromrichterventil Sᵢⱼ werden im Ansteuerverfahren MB in Schritt M6 dann durch die Ventilsteuereinrichtung 4 jedes der Stromrichterventile Sᵢⱼ Gatesignale für Gateanschlüsse der Schalter 2a, 2b des bidirektionalen Schaltelements 1 erzeugt.

Die dynamisch adaptiven Verzögerungssollwerte bei der Anpassung der Gatesignale ermöglichen es in vorteilhafter Weise, ein kontinuierliches Pulsweitenmodulationsverfahren, wie etwa eine Raumzeigermodulation, eine sinusoidale Pulsweitenmodulation, eine Pulsweitenmodulation nach Schörner-Hanning, ein kontinuierliches Unterschwingungsverfahren oder ein Injektionsverfahren dritter Harmonischer zu implementieren. Gleichzeitig dazu kann die zustandsabhängig anzupassende Verzögerung auf der Basis der gemessenen Lastströme in den Umrichterzweigen ermittelt und die theoretisch idealen Steuersignale der kontinuierliches Pulsweitenmodulation zeitsynchron verzögert werden.

Fig. 5 stellt eine allgemeine Funktionsblockstruktur der Ansteuerung eines selbstgeführten Direktumrichters 10 mit integrierten Ventilsteuereinrichtungen 4 dar. Das Umrichtersteuergerät 5 kann beispielsweise einen Berechnungseinheit 5a für die Berechnung analoger Phasen- und Amplitudenwerte Vᵢⱼ aufweisen, die in einer Komparatoreinheit 5b auf ein durch einen Trägerfrequenzgenerator 9 generiertes Trägersignal aufmoduliert werden. Beispielsweise kann der Trägerfrequenzgenerator 9 absteigende Sägezahnträgersignale, ansteigende Sägezahnträgersignale oder Dreiecksträgersignale gewünschter Modulationsfrequenz generieren.

Die Komparatoreinheit 5b gibt dann die Steuersignale Xᵢⱼ für die einzelnen in die Stromrichterventile Sᵢⱼ des selbstgeführten Direktumrichters 10 integrierten Ventilsteuereinrichtungen 4 aus, die wiederum in zwei Gatesignale Xa bzw. Xb unter Berücksichtigung der durch die Verzögerungssteuereinrichtung 8 generierten Verzögerungssollwerte aufgeteilt werden. Die Verzögerungssteuereinrichtung 8 kann insbesondere die für die Bestimmung der Verzögerungssollwerte nötigen Messwerte der elektrischen Betriebsparameter Z von einer Laststrommesseinrichtung 8a des Direktumrichters 10 erhalten. Die integrierten Ventilsteuereinrichtungen 4 können beispielsweise jeweils auf einem Field Programmable Gate Array (FPGA) oder einem anwendungsspezifischen integrierten Schaltkreis (ASIC) implementiert werden.

Die vorstehend beschriebenen selbstgeführten Direktumrichter können vorteilhafterweise einen bidirektionalen Stromfluss von Netz- zu Lastseite und umgekehrt realisieren. Dabei bieten selbstgeführte Direktumrichter die Möglichkeit, einen Leistungsfaktor einzustellen und die Qualität der Wellenformen zu verbessern. Selbstgeführte Direktumrichter weisen zudem einen kompakten und kosteneffizienten Aufbau auf und bieten eine gute elektromagnetische Verträglichkeit. Auf Basis ihrer spezifischen Eigenschaften ergeben sich neben den Einsatzmöglichkeiten zur Motorsteuerung auch Anwendungsoptionen als Tiefsetzsteller sowie innerhalb kombinierter Schaltungsarchitekturen zur stoßlastfähigen Energieversorgung.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Selbstgeführter Direktumrichter (10), umfassend:
eine Schaltmatrix aus mehreren Stromrichterventilen (Sᵢⱼ), welche jeweils ein zwei Schalter (2a, 2b) aufweisendes bidirektionales Schaltelement (1) aufweisen,
**dadurch gekennzeichnet, dass** die Stromrichterventile (Sᵢⱼ) jeweils eine Ventilsteuereinrichtung (4) aufweisen, wobei die Ventilsteuereinrichtungen (4) jeweils aufweisen:
eine Kommutierungssteuervorrichtung (6), welche dazu ausgelegt ist, pulsweitenmodulierte Steuersignale (Xᵢⱼ) zu empfangen und auf deren Basis idealisierte Gatesignale zu erzeugen; und
zwei Gatetreiber (7a; 7b), welche mit der Kommutierungssteuervorrichtung (6) gekoppelt sind, und welche dazu ausgelegt sind, in Abhängigkeit von laststromabhängigen negativen oder positiven Verzögerungssollwerten (Za; Zb) die von der Kommutierungssteuervorrichtung (6) empfangenen idealisierten Gatesignale zeitlich zu verschieben und als verzögerungsangepasste Gatesignale (Xa; Xb) an Gateanschlüsse der Schalter (2a; 2b) des bidirektionalen Schaltelements (1) auszugeben.

2. Direktumrichter (10) gemäß Anspruch 1, wobei die pulsweitenmodulierte Steuersignale (Xᵢⱼ) auf der Basis eines kontinuierlichen Pulsweitenmodulationsverfahrens erzeugt werden.

3. Direktumrichter (10) gemäß Anspruch 2, wobei das kontinuierliche Pulsweitenmodulationsverfahren ein Raumzeigermodulationsverfahren oder ein kontinuierliches Unterschwingungsverfahren umfasst.

4. Direktumrichter (10) gemäß einem der Ansprüche 1 bis 3, weiterhin mit:
einer mit den Gatetreibern (7a, 7b) gekoppelte
Verzögerungssteuereinrichtung (8), welche momentane Messwerte für elektrische Betriebsparameter (Z) des Direktumrichters (10) erhält und in Abhängigkeit von den momentanen Messwerten für die elektrischen Betriebsparameter (Z) die laststromabhängigen Verzögerungssollwerte (Za; Zb) berechnet.

5. Direktumrichter (10) gemäß Anspruch 4, wobei die momentanen Messwerte für elektrische Betriebsparameter (Z) die Richtung des Laststromflusses und den Betrag des momentanen Laststroms in den einzelnen Umrichterzweigen des Direktumrichters (10) umfassen.

6. Direktumrichter (10) gemäß einem der Ansprüche 1 bis 5, wobei die Schalter (2a; 2b) des bidirektionalen Schaltelements antiseriell geschaltete Halbleiterschalter mit jeweils antiparallel geschalteter Freilaufdiode (3a; 3b) umfassen.

7. Direktumrichter (10) gemäß Anspruch 6, wobei die antiseriell geschalteten Halbleiterschalter IGBT-Schalter oder MOSFET-Schalter, insbesondere SiC-MOSFET-Schalter, umfassen.

8. Ansteuerverfahren (MA) für einen selbstgeführten Direktumrichter (10) mit einer Schaltmatrix aus mehreren Stromrichterventilen (Sᵢⱼ) welche jeweils ein zwei Schalter (2a, 2b) aufweisendes bidirektionales Schaltelement (1) und eine Ventilsteuereinrichtung (4) aufweisen, **dadurch gekennzeichnet, dass** das Ansteuerverfahren (M) umfasst:
Erzeugen (M1) pulsweitenmodulierter Steuersignale (Xᵢⱼ) für jedes der Stromrichterventile (Sᵢⱼ);
Erzeugen (M2), durch die Ventilsteuereinrichtung (4) jedes der Stromrichterventile (Sᵢⱼ), von idealisierten Gatesignalen auf der Basis des pulsweitenmodulierten Steuersignals (Xᵢⱼ) für das jeweilige Stromrichterventil (Sᵢⱼ);
Bestimmen (M3) von laststromabhängigen negativen oder positiven Verzögerungssollwerten (Za; Zb) auf der Basis des momentanen Laststroms durch die Umrichterzweige des Direktumrichters (10); und
Zeitliches Verschieben (M4) der idealisierten Gatesignale in Abhängigkeit von den laststromabhängigen Verzögerungssollwerten (Za; Zb) zur Bildung verzögerungsangepasster Gatesignale (Xa; Xb) für Gateanschlüsse der Schalter (2a; 2b) des bidirektionalen Schaltelements (1).

9. Elektrisches Antriebssystem, mit:
einem selbstgeführten Direktumrichter (10) gemäß einem der Ansprüche 1 bis 7;
einer an die Ausgangsphasen (L1; L2; L3) angeschlossenen elektrischen Maschine; und
einem Netzspannungsfilter, welches mit den Eingangsphasen (U; V; W) desselbstgeführten Direktumrichters (10) gekoppelt ist.

## Claims

1. Self-commuted direct converter (10), comprising:
a switching matrix of a plurality of converter valves (Sᵢⱼ), which each have a bidirectional switching element (1) having two switches (2a, 2b),
**characterised in that** the converter valves (Sij) each have a valve control means (4), the valve control means (4) each having:
a commutation control device (6) configured to receive pulse-width-modulated control signals (Xᵢⱼ) and to generate idealised gate signals on the basis thereof; and
two gate drivers (7a; 7b) which are coupled to the commutation control device (6) and which are configured to time-shift the idealised gate signals received from the commutation control device (6) as a function of negative or positive target delay values (Za; Zb), which are dependent on the load current, and to output them, as delay-adjusted gate signals (Xa; Xb), to gate connections of the switches (2a; 2b) of the bidirectional switching element (1).

2. Direct converter (10) according to claim 1, wherein the pulse-width-modulated control signals (Xᵢⱼ) are generated on the basis of a continuous pulse width modulation method.

3. Direct converter (10) according to claim 2, wherein the continuous pulse width modulation method comprises a space vector modulation method or a continuous undershoot method.

4. Direct converter (10) according to any of claims 1 to 3, further comprising:
a delay control means (8) which is coupled to the gate drivers (7a, 7b) and which receives instantaneous measurement values for electrical operating parameters (Z) of the direct converter (10) and calculates the target delay values (Za; Zb), which are dependent on the load current, as a function of the instantaneous measurement values for the electrical operating parameters (Z).

5. Direct converter (10) according to claim 4, wherein the instantaneous measurement values for electrical operating parameters (Z) include the flow direction of the load current and the magnitude of the instantaneous load current in the individual converter branches of the direct converter (10).

6. Direct converter (10) according to any of claims 1 to 5, wherein the switches (2a; 2b) of the bidirectional switching element comprise semiconductor switches, connected in anti-series and each having a flyback diode (3a; 3b) connected in antiparallel.

7. Direct converter (10) according to claim 6, wherein the semiconductor switches connected in anti-series comprise IGBT switches or MOSFET switches, in particular SiC MOSFET switches.

8. Actuation method (MA) for a self-commuted direct converter (10), comprising a switching matrix of a plurality of converter valves (Sij), which each have a bidirectional switching element (1), having two switches (2a, 2b), and a valve control means (4), **characterised in that** the actuation method (M) comprises:
generating (M1) pulse-width-modulated control signals (Xᵢⱼ) for each of the converter valves (Sij);
generating (M2) idealised gate signals, by way of the valve control means (4) of each of the converter valves (Sij), on the basis of the pulse-width-modulated control signal (Xᵢⱼ) for the associated converter valve (Sij);
determining (M3) negative or positive target delay values (Za; Zb), which are dependent on the load current, on the basis of the instantaneous load current through the converter branches of the direct converter (10); and
time-shifting (M4) the idealised gate signals as a function of the target delay values (Za; Zb), which are dependent on the load current, to form delay-adjusted gate signals (Xa; Xb) for gate connections of the switches (2a; 2b) of the bidirectional switching element (1).

9. Electrical drive system, comprising:
a self-commuted direct converter (10) according to any of claims 1 to 7;
an electric motor connected to the output phases (L1; L2; L3); and
a supply voltage filter coupled to the input phases (U; V; W) of the self-commuted direct converter (10).

## Revendications

1. Convertisseur direct à commutation automatique (10), comprenant :
une matrice de commutation composée de plusieurs valves de convertisseur (Sij) qui présentent chacune un élément de commutation bidirectionnel (1) présentant deux commutateurs (2a, 2b),
**caractérisé en ce que** les valves de convertisseur (Sij) présentent chacune un moyen de commande de valve (4), les moyens de commande de valve (4) présentant chacun :
un dispositif de commande de commutation (6) qui est conçu pour recevoir des signaux de commande modulés en largeur d'impulsion (Xᵢⱼ) et pour générer des signaux de grille idéalisés sur la base de ceux-ci ; et
deux pilotes de grille (7a ; 7b) qui sont couplés au dispositif de commande de commutation (6) et qui sont conçus pour décaler dans le temps, en fonction de valeurs de consigne de retard négatives ou positives (Za ; Zb) dépendantes du courant de charge, les signaux de grille idéalisés reçus par le dispositif de commande de commutation (6) et pour les délivrer en tant que signaux de grille (Xa ; Xb) adaptés au retard à des connexions de grille des commutateurs (2a ; 2b) de l'élément de commutation bidirectionnel (1) .

2. Convertisseur direct (10) selon la revendication 1, dans lequel les signaux de commande modulés en largeur d'impulsion (Xᵢⱼ) sont générés sur la base d'un procédé de modulation de largeur d'impulsion continue.

3. Convertisseur direct (10) selon la revendication 2, dans lequel le procédé de modulation de largeur d'impulsion continue comprend un procédé de modulation par vecteur spatial ou un procédé de sous-oscillation continue.

4. Convertisseur direct (10) selon l'une des revendications 1 à 3, présentant en outre :
un moyen de commande de retard (8) couplé aux pilotes de grille (7a, 7b), qui reçoit des valeurs de mesure instantanées de paramètres de fonctionnement électriques (Z) du convertisseur direct (10) et calcule les valeurs de consigne de retard (Za ; Zb) dépendantes du courant de charge en fonction des valeurs de mesure instantanées des paramètres de fonctionnement électriques (Z).

5. Convertisseur direct (10) selon la revendication 4, dans lequel les valeurs de mesure instantanées des paramètres de fonctionnement électriques (Z) comprennent la direction du flux de courant de charge et le montant du courant de charge instantané dans les différentes branches de convertisseur du convertisseur direct (10).

6. Convertisseur direct (10) selon l'une des revendications 1 à 5, dans lequel les commutateurs (2a ; 2b) de l'élément de commutation bidirectionnel comprennent des commutateurs à semi-conducteurs montés en anti-série avec des diodes de roue libre (3a ; 3b) montées chaque fois en antiparallèle.

7. Convertisseur direct (10) selon la revendication 6, dans lequel les commutateurs à semi-conducteurs montés en anti-série comprennent des commutateurs IGBT ou des commutateurs MOSFET, en particulier des commutateurs MOSFET SiC.

8. Procédé de commande (MA) pour un convertisseur direct à commutation automatique (10) comprenant une matrice de commutation composée de plusieurs valves de convertisseur (Sij) qui présentent chacune un élément de commutation bidirectionnel (1) présentant deux commutateurs (2a, 2b) et un moyen de commande de valve (4), **caractérisé en ce que** le procédé de commande (M) comprend les étapes consistant à :
générer (M1) des signaux de commande modulés en largeur d'impulsion (Xᵢⱼ) pour chacune des valves de convertisseur (Sᵢⱼ) ;
générer (M2), par le moyen de commande de valve (4) de chacune des valves de convertisseur (Sij), des signaux de grille idéalisés sur la base du signal de commande modulé en largeur d'impulsion (Xᵢⱼ) pour la valve de convertisseur respective (Sij) ;
déterminer (M3) des valeurs de consigne de retard négatives ou positives dépendantes du courant de charge (Za ; Zb) sur la base du courant de charge instantané à travers les branches de convertisseur du convertisseur direct (10) ; et
décaler dans le temps (M4) les signaux de grille idéalisés en fonction des valeurs de consigne de retard dépendantes du courant de charge (Za ; Zb) pour former des signaux de grille adaptés au retard (Xa ; Xb) pour des connexions de grille des commutateurs (2a ; 2b) de l'élément de commutation bidirectionnel (1).

9. Système d'entraînement électrique, comprenant :
un convertisseur direct à commutation automatique (10) selon l'une des revendications 1 à 7 ;
une machine électrique connectée aux phases de sortie (L1 ; L2 ; L3) ; et
un filtre de tension réseau qui est couplé aux phases d'entrée (U ; V ; W) du convertisseur direct à commutation automatique (10).
